# EUROPEAN PATENT APPLICATION

(11) **EP 4 790 973 A1**
(43) Date of publication of application: **12.08.2026**
(21) Application number: 24888976.8
(22) Date of filing: 21.10.2024
(51) Int. Cl.: H04M 1/72436, H04M 1/72454, H04W 4/14

(54) **METHOD FOR PROVIDING NOTIFICATION AND ELECTRONIC DEVICE THEREFOR**

(30) Priority: 07.11.2023 KR 20230152468; 13.02.2024 KR 20240020398
(71) Applicant: Samsung Electronics Co., Ltd., Suwon-si, Gyeonggi-do 16677 (KR)
(72) Inventor: CHUNG, Miyeoung, Suwon-si, Gyeonggi-do 16677 (KR); MOON, Minjung, Suwon-si, Gyeonggi-do 16677 (KR); PARK, Eunhae, Suwon-si, Gyeonggi-do 16677 (KR); BAE, Yeonwoong, Suwon-si, Gyeonggi-do 16677 (KR); LIM, Yeunwook, Suwon-si, Gyeonggi-do 16677 (KR)
(74) Representative: Gulde & Partner
(86) International application number: PCT/KR2024/015980
(87) International publication number: WO 2025/100783

(57) **Abstract**

One embodiment of the present invention may comprise a display (160), a communication module (190), a memory (130) for storing instructions, and a processor (120). The instructions stored in the memory, when executed by the processor, may instruct an electronic device to: receive a first notification through the communication module and display same; identify a second notification which can be grouped with the first notification; transmit the first notification and the second notification to a server (108) through the communication module; obtain a summary notification generated on the basis of the first notification and the second notification from the server; and display the generated summary notification on the display.

## Description

### [Technical Field]

Various embodiments of the disclosure provide a method for providing a notification and an electronic device therefor.

### [Background Art]

With the advance of digital technology, various types of electronic devices such as a mobile communication terminal, a personal digital assistant (PDA), an electronic organizer, a smartphone, a tablet personal computer (PC), or a wearable device are widely used. In order to support and enhance functionality, such electronic devices are continuously being improved in terms of hardware and/or software.

An electronic device may receive a notification in real time or periodically from an application or service (e.g., a system) installed in the electronic device. However, the notification may be displayed in a notification list of a lock screen or in a notification list via a status bar until the notification is identified by a user.

### [Disclosure of Invention]

### [Technical Problem]

Notifications are intended to rapidly provide information to a user of an electronic device. However, as a large number of notifications are simply displayed in the order of reception (or acquisition) time, readability of the notifications is reduced. Further, due to a large number of current messages, an old message is not displayed (or is displayed as ...), and thus the user may not view the message.

An embodiment may provide a method and a device for analyzing the context of a notification and reconfiguring the notification, thereby improving rapid delivery of information, which is an original purpose of notifications, and task productivity.

### [Solution to Problem]

An electronic device according to an embodiment of the disclosure may include a display (160), a communication module (190), a memory (130) configured to store instructions, and a processor (120), wherein the instructions stored in the memory, when executed by the processor, cause the electronic device to receive a first notification through the communication module and display the first notification, identify a second notification capable of being grouped with the first notification, transmit the first notification and the second notification to a server (108) through the communication module, obtain a summary notification generated based on the first notification and the second notification from the server, and display the generated summary notification on the display.

An operation method of an electronic device (101) according to an embodiment of the disclosure may include receiving a first notification from a communication module (190) of the electronic device and displaying the first notification on a display (160) of the electronic device, identifying a second notification capable of being grouped with the first notification, transmitting the first notification and the second notification to a server (108) through the communication module, obtaining a summary notification generated based on the first notification and the second notification from the server, and displaying the generated summary notification on the display.

### [Advantageous Effects of Invention]

According to an embodiment, the context of a notification may be analyzed to display a reconfigured generated summary notification, thereby improving notification readability through the generated summary notification.

According to an embodiment, notifications are not simply displayed in chronological order, and a notification considered important by a user may be preferentially displayed, and be reprocessed and provided according to a desired purpose, thereby increasing concentration on the notification.

According to an embodiment, a language of a notification (e.g., English → Korean) or a display format of a notification (e.g., text → image) may be reprocessed to generate a user-centered summary notification, thereby providing summary notifications differently processed according to a preference of a user instead of providing uniformly identical notifications.

According to an embodiment, a generated summary notification and an original notification may be displayed together, thereby enabling a user to simultaneously identify the newly generated summary notification and the existing notification.

### [Brief Description of Drawings]

FIG. 1 is a block diagram of an electronic device in a network environment according to an embodiment.
FIG. 2 is a diagram illustrating an example of providing a generated summary notification in an electronic device according to an embodiment.
FIG. 3 is a flowchart illustrating a notification provision method of an electronic device according to an embodiment.
FIG. 4 is a diagram illustrating a configuration of providing a notification in an electronic device according to an embodiment.
FIG. 5 is a diagram illustrating an example of displaying an existing notification and a generated summary notification in an electronic device according to an embodiment.
FIG. 6 is a flowchart illustrating a generated summary notification provision method of an electronic device according to an embodiment.
FIG. 7 is a diagram illustrating an example of displaying an existing notification and a generated summary notification in an electronic device according to an embodiment.
FIG. 8 is a flowchart illustrating a method of generating a generated summary notification in an electronic device according to an embodiment.
FIG. 9A and FIG. 9B are diagrams illustrating a type of a generated summary notification according to an embodiment.
FIG. 10A and FIG. 10B are diagrams illustrating an example of providing a notification in an electronic device and an external electronic device according to an embodiment.

### [Mode for the Invention]

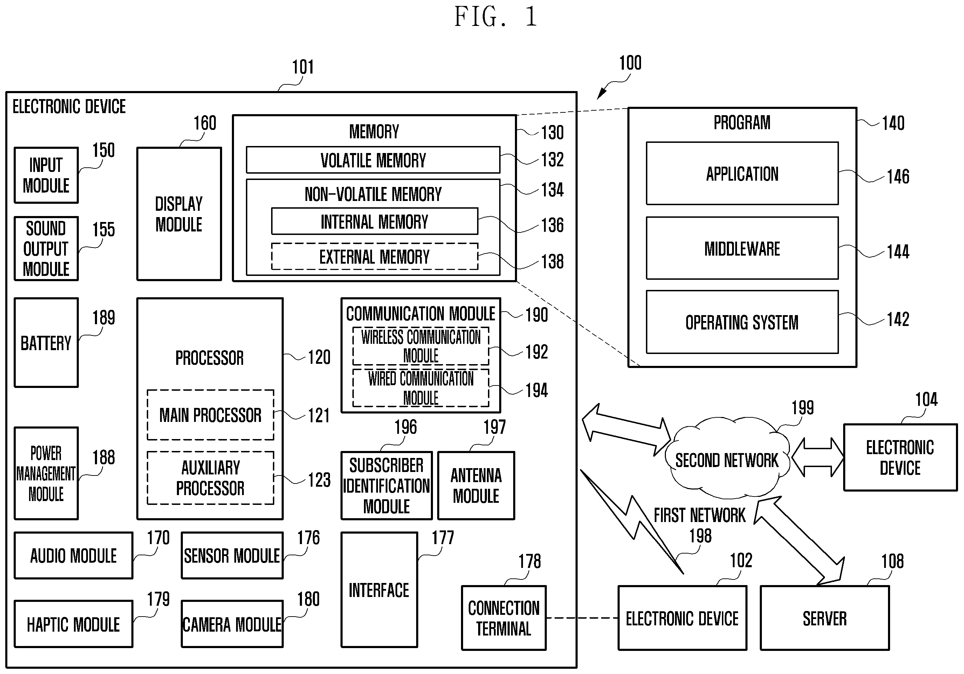

Fig. 1 is a block diagram illustrating an electronic device 101 in a network environment 100 according to certain embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities mat be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

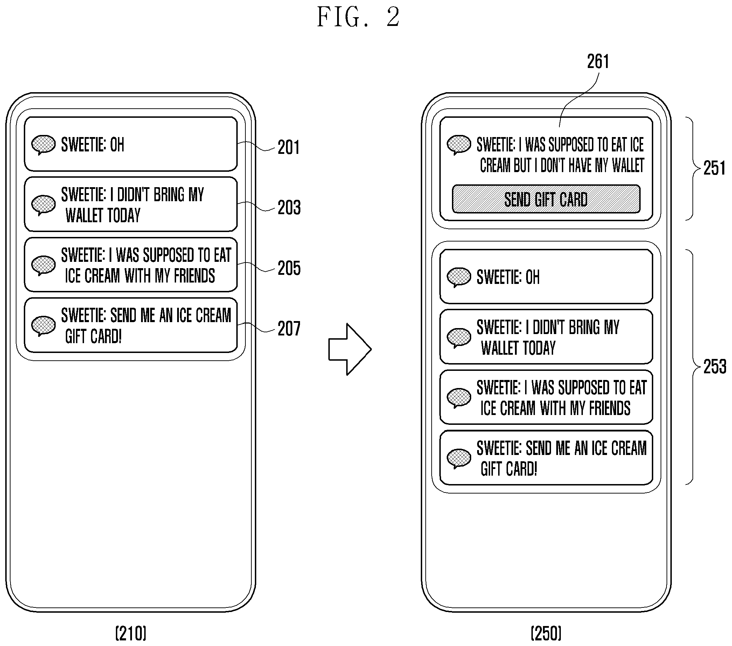

FIG. 2 is a diagram illustrating an example of providing a generated summary notification in an electronic device according to an embodiment.

Referring to FIG. 2, a processor (e.g., the processor 120 in FIG. 1) of an electronic device (e.g., the electronic device 101 in FIG. 1) according to an embodiment may acquire (or receive) a notification from an application or service (e.g., system) installed in the electronic device 101, and display the acquired notification. For example, the processor 120 may display a first notification 201, a second notification 203, a third notification 205, and a fourth notification 207, as shown in a first user interface 210. The first notification 201 to the fourth notification 207 may be obtained from the same application, and the processor 120 may display the notifications in the order of time at which the notifications are obtained. This example is for the purpose of helping to understand the disclosure and are not intended to limit the content of the disclosure. For example, the processor 120 may display the lastly acquired notification (e.g., the fourth notification 207) in a top portion, or display the first acquired notification (e.g., the first notification 201) in the top portion.

The processor 120 may transmit the first notification 201 to the fourth notification 207 to an intelligent server (e.g., the server 108 in FIG. 1). The server 108 may analyze the first notification 201 to the fourth notification 207 to generate a summary notification 251. The server 108 may transfer the summary notification 251 generated based on the first notification 201 to the fourth notification 207 to the electronic device 101. Alternatively, inside the electronic device 101, the processor 120 may analyze the first notification 201 to the fourth notification 207 to generate the summary notification 251. The processor 120 may, when the fourth notification 207 is received after reception of the first notification 201 to the third notification 205, analyze a usage history of the fourth notification 207, analyze a relationship among the first notification 201 to the fourth notification 207, and identify the first notification 201 to the third notification 205 capable of being grouped with the fourth notification 207, based on a result of the analysis. The generated summary notification 251 may include at least one of text 261, an image (e.g., an application icon), or a video corresponding to the first notification 201 to the fourth notification 207. In addition, the generated summary notification 251 may further include a task action item 263 for performing a function associated with the first notification 201 to the fourth notification 207.

After generating the generated summary notification 251, the processor 120 may display a second user interface 250 instead of the first user interface 210. The second user interface 250 may include the generated summary notification 251 and an existing notification 253. The existing notification 253 may include the first notification 201 to the fourth notification 207. The processor 120 may display the generated summary notification 251 in the top portion of the display (e.g., the display module 160 in FIG. 1), and may display the existing notification 253 below the generated summary notification 251. The processor 120 may display both the generated summary notification 251 and the existing notification 253, thereby enabling a user to simultaneously identify the newly generated summary notification 251 and the existing notification 253.

According to an embodiment, the processor 120 may include a detailed view button in a bottom portion of the generated summary notification 251, and may display the existing notification 253 when the user selects the detailed view button. For example, when displaying a notification, the processor 120 may display only the generated summary notification 251, without displaying the existing notification 253 corresponding to the generated summary notification 251 and, when the user requests to display the existing notification (e.g., selects the detailed view button), may display the existing notification 253 instead of the generated summary notification 251. The existing notification 253 may be displayed as a separate bubble or may be displayed as a single bubble.

According to an embodiment, the processor 120 may, when a fifth notification is acquired after displaying the generated summary notification 251, analyze (or determine) whether the fifth notification is associated with the generated summary notification 251, and if the fifth notification is associated with the generated summary notification 251, may update the generated summary notification 251, based on the first notification 201 to the fifth notification. When the fifth notification is acquired in a state where the generated summary notification 251 has not been identified by the user, the processor 120 may update the generated summary notification 251, based on the first notification 201 to the fifth notification. When the generated summary notification 251 is identified by the user, the processor 120 may remove the display of the generated summary notification 251, and generate a new generated summary notification (or an updated summary notification), based on the fifth notification. Alternatively, when the generated summary notification 251 is identified by the user, the processor 120 may remove the display of the generated summary notification 251, not generate a new generated summary notification, and display the fifth notification.

When the fifth notification is acquired after displaying the generated summary notification 251, the processor 120 may transmit the generated summary notification 251 and the fifth notification to the server 108. The server 108 may analyze (or determine) whether the fifth notification is associated with the generated summary notification 251, and if the fifth notification is associated with the generated summary notification 251, may update the generated summary notification 251, based on the first notification 201 to the fifth notification. The server 108 may transmit the updated summary notification to the electronic device 101. Alternatively, the processor 120 may display the updated summary notification received from the server 108.

According to an embodiment, when the generated summary notification 251 is selected in the second user interface 250, the processor 120 may provide an execution screen of an application associated with the generated summary notification 251. The processor 120 may display the generated summary notification 251 in the execution screen of the application. The processor 120 may provide the content or history of the generated summary notification 251 in the execution screen of the application.

An electronic device 101 according to an embodiment of the disclosure may include a display 160, a communication module 190, a memory 130 configured to store instructions, and a processor 120, wherein the instructions stored in the memory, when executed by the processor, cause the electronic device to receive a first notification through the communication module and display the first notification, identify a second notification capable of being grouped with the first notification, transmit the first notification and the second notification to a server 108 through the communication module, obtain a summary notification generated based on the first notification and the second notification from the server, and display the generated summary notification on the display.

The generated summary notification may include at least one of text, an image, or a video corresponding to the first notification and the second notification, and further include a task action item for performing a function associated with the first notification and the second notification.

The instructions, when executed by the processor, may cause the electronic device to, after acquiring the second notification, acquire the first notification, analyze a usage history regarding the first notification, analyze a relationship between the first notification and the second notification, and identify the second notification capable of being grouped with the first notification, based on a result of the analysis.

The instructions, when executed by the processor, may cause the electronic device to determine whether the first notification is of a first type, in case that the first notification is of the first type, determine whether there is another notification of the first type, and in case that the another notification of the first type exists, identify the another notification of the first type as the second notification capable of being grouped with the first notification.

The instructions, when executed by the processor, may cause the electronic device to, in case that the first notification is not of the first type, determine whether the first notification is of a second type, in case that the first notification is of the second type, determine whether there is another notification of the second type, and in case that the another notification of the second type exists, identify the another notification of the second type as the second notification capable of being grouped with the first notification.

The instructions, when executed by the processor, may cause the electronic device to display the generated summary notification in an upper portion of the display and display the first notification and the second notification below the generated summary notification.

The instructions, when executed by the processor, may cause the electronic device to, in case that there are multiple generated summary notifications, determine priorities of the generated summary notifications, and in case that display of a notification list is requested, display a first generated summary notification having a high determined priority.

The instructions, when executed by the processor, may cause the electronic device to, while displaying the first generated summary notification, detect a user input that requests display of a second generated summary notification, and in response to the detected user input, change the first generated summary notification to the second generated summary notification and display the second generated summary notification.

The instructions, when executed by the processor, may cause the electronic device to display the first generated summary notification in an upper portion of the display, and below the first generated summary notification, display a notification associated with the first generated summary notification above a notification not associated with the first generated summary notification.

The instructions, when executed by the processor, may cause the electronic device to, in case that a third notification associated with the generated summary notification is acquired, update the generated summary notification, based on the first notification, the second notification, and the third notification.

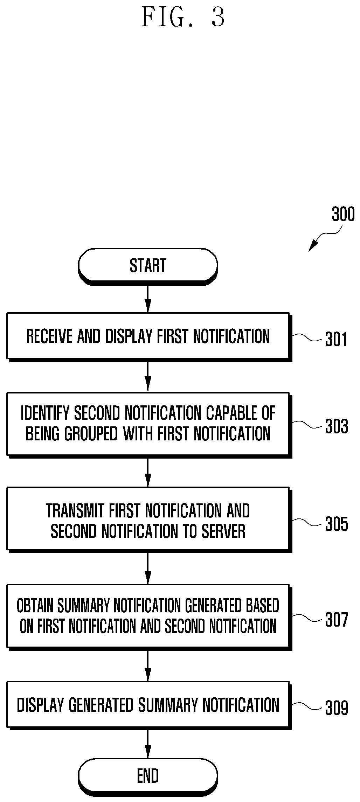

FIG. 3 is a flowchart 300 illustrating a notification provision method of an electronic device according to an embodiment.

Referring to FIG. 3, in operation 301, a processor (e.g., the processor 120 in FIG. 1) of an electronic device (e.g., the electronic device 101 in FIG. 1) according to an embodiment may acquire (or receive) a first notification and display the first notification on a display (e.g., the display module 160 in FIG. 1). The processor 120 may obtain (or receive) the first notification as a new notification from an application or service (e.g., a system) installed in the electronic device 101. The processor 120 may acquire the first notification in a case where the application or the electronic device 101 is allowed to receive a push message. The processor 120 may obtain the first notification, based on a user' account configured in the electronic device 101. The user may use multiple electronic devices with one user account. For example, when the user uses two electronic devices by using one user account, notifications acquired from the two electronic devices may be shared. In other words, when a notification is identified in the electronic device 101 (e.g., smartphone), the notification may be deleted without being displayed on the other electronic device (e.g., laptop).

In operation 303, the processor 120 may identify a second notification capable of being grouped with the first notification. The processor 120 may acquire the first notification after acquiring the second notification. The processor 120 may determine whether the first notification is of a first type, and if the first notification is of the first type, determine whether there is another notification of the first type, and identify the second notification as the another notification of the first type. Alternatively, the processor 120 may, if the first notification is not of the first type, determine whether the first notification is of a second type, and if the first notification is of the second type, determine whether there is another notification of the second type, and identify the second notification as the another notification of the second type. Hereinafter, an example for the first type and the second type is described for the purpose of helping to understand the disclosure, but the application type may further include other types (e.g., a third type and a fourth type) in addition to the first and second types. The disclosure is not to be limited by the description.

For the sake of easier understanding, the second notification may be acquired from the same application as that of the first notification, or may be acquired from an application of the same type as that of the first notification. The type of the application may be a type where a target associated with a notification is specified as a person, such as in calls, messages, or messengers, or is identified as an object (e.g., the same product). For example, the first type may be a contact type, and the second type may be an object type excluding the contact type. The type of the application may be determined based on a category of the application. For example, the category of the application may include at least one of social media, shopping, travel and local, communication, entertainment, sports, productivity, finance, or lifestyle.

According to an embodiment, the processor 120 may not perform operations 305 to 309 when the second notification associated with the first notification is not identified. Alternatively, the processor 120 may acquire a summary notification generated based on the first notification, when the second notification associated with the first notification is not identified. For example, the processor 120 may generate the generated summary notification in a language that maximizes the user's concentration. For example, even though the first notification is provided in English, the generated summary notification may be generated in Korean. In addition, even though the first notification is provided as text, the generated summary notification may be generated as an image. This is only an implementation issue and the disclosure is not to be limited by the description.

In operation 305, the processor 120 may transmit the first notification and the second notification to an intelligent server (e.g., the server 108 in FIG. 1). The server 108 may analyze the first notification and the second notification to generate a summary notification. For example, the generated summary notification may be a notification reconfigured through analysis of the context of the first notification and the second notification. The generated summary notification may include at least one of text, an image, or a video corresponding to the first notification and the second notification. In addition, the generated summary notification may further include a task action item for performing a function associated with the first notification and the second notification. The server 108 may transmit the generated summary notification to the electronic device 101.

According to an embodiment, operation 305 may be omitted in a case the electronic device 101 is able to generate the summary notification, based on the first notification and the second notification.

In operation 307, the processor 120 may acquire a summary notification generated based on the first notification and the second notification from the server. According to an embodiment, the processor 120 may analyze a usage history regarding the first notification, analyze a relationship between the first notification and the second notification, and acquire a summary notification generated based on a result of the analysis. The usage history regarding the first notification refers to the usage history of an application associated with the first notification, and may correspond to whether the application is frequently used, is occasionally used, or has been recently used. Alternatively, in a case where the first notification includes a counterpart contact (e.g., a phone number or an email address), the processor 120 may analyze, as the usage history regarding the first notification, whether the counterpart contact is stored (or registered) in contacts of the electronic device 101, or whether the counterpart is a person frequently contacted, a person occasionally contacted, a person who has been recently contacted, or a person registered as a favorite. For example, the processor 120 may collect the usage history between before and after the user uses the electronic device 101 (e.g., lock → unlock → lock).

In operation 309, the processor 120 may display the generated summary notification on the display module 160. The processor 120 may display the generated summary notification in an upper portion of the display module 160, and display the first notification and the second notification, which corresponds to an existing notification, below the generated summary notification. The processor 120 may display the first notification above the second notification on the display module 160 in the order in which the notifications are acquired. According to an embodiment, the processor 120 may include a detailed view button in a bottom portion of the generated summary notification, and may display the existing notification when the user selects the detailed view button. For example, when displaying a notification, the processor 120 may display only the generated summary notification, without displaying the existing notification corresponding to the generated summary notification and, when the user requests to display the existing notification, may display the existing notification instead of the generated summary notification.

According to an embodiment, when a user input that selects the generated summary notification is detected, the processor 120 may provide an execution screen of an application associated with the generated summary notification. The processor 120 may display the generated summary notification in the execution screen of the application. That is, the processor may display a notification based on which the generated summary notification is generated. For example, in a case where the existing notification is a message of a message application, when the user identifies a message associated with the generated summary notification, the processor may display the generated summary notification in a pop-up form or display the generated summary notification in a region adjacent to the message. Alternatively, the processor 120 may provide the content or history of the generated summary notification in the execution screen of the application.

According to an embodiment, after displaying the generated summary notification, the processor 120 may obtain a third notification which is a new notification. The processor 120 may analyze (or determine) whether the third notification is associated with the generated summary notification, and if the third notification is associated with the generated summary notification, may update the generated summary notification, based on the first notification, the second notification, and the third notification. When the third notification is acquired in a state where the generated summary notification has not been identified by the user, the processor 120 may update the generated summary notification, based on the first notification to the third notification.

According to an embodiment, when the generated summary notification is identified by the user, the processor 120 may remove (or stop) the display of the generated summary notification and, if the third notification is associated with the generated summary notification, may not generate a new generated summary notification, and display the third notification. The processor 120 may, if the third notification is not associated with the generated summary notification, identify whether there is another notification associated with the third notification, and generate a new generated summary notification, based on the identified another notification and the third notification.

According to an embodiment, in a case where there are multiple generated summary notifications, the processor 120 may determine priorities of the generated summary notifications, and when display of a notification list is requested, display a first generated summary notification having a high determined priority. The priorities of the generated summary notifications may be determined based on chronological order (e.g., the last update), the number of grouped notifications, the user's application usage history, or the importance of a contact. The processor 120 may, while displaying the first generated summary notification, detect a user input that requests display of a second generated summary notification and, in response to the detected user input, change the first generated summary notification to the second generated summary notification and display the second generated summary notification.

According to an embodiment, the processor 120 may, when displaying an existing notification below the first generated summary notification, display an existing notification associated with the first generated summary notification above an existing notification not associated with the first generated summary notification. In a case where there are multiple generated summary notifications, the processor 120 may change (or adjust) a display order of an existing notification according to a displayed generated summary notification. For example, in a case where there are two generated summary notifications and five existing notifications, the processor 120 may, while displaying the first generated summary notification, display, on the display module 160, two existing notifications associated with the first generated summary notification above three existing notifications not associated with the first generated summary notification.

According to an embodiment, the processor 120 may determine the priority of a target stored (or registered) in a contact application to be higher than that of a target not stored in the contact application. In addition, when a new notification is acquired, the processor 120 may determine whether the new notification corresponds to an advertisement or spam, and if the new notification corresponds to an advertisement or spam, may remove (or delete) the display of the new notification.

According to an embodiment, in a case where the processor 120 generates a generated summary notification, based on a target stored (or registered) in the contact application, the processor 120 may differently reconfigure the generated summary notification according to whether communication is one-to-one communication with the target or communication within a group including the target. For example, when a first notification is acquired through one-to-one communication (e.g., a messenger application) from a counterpart A and a second notification is acquired through communication in a group including the counterpart A, the processor 120 may not generate a single generated summary notification by using the first notification and the second notification. That is, even if the first notification and the second notification are received from the same application and from the same counterpart, a one-to-one notification and a group notification may be identified as separate notifications instead of being bundled to generate a single generated summary notification.

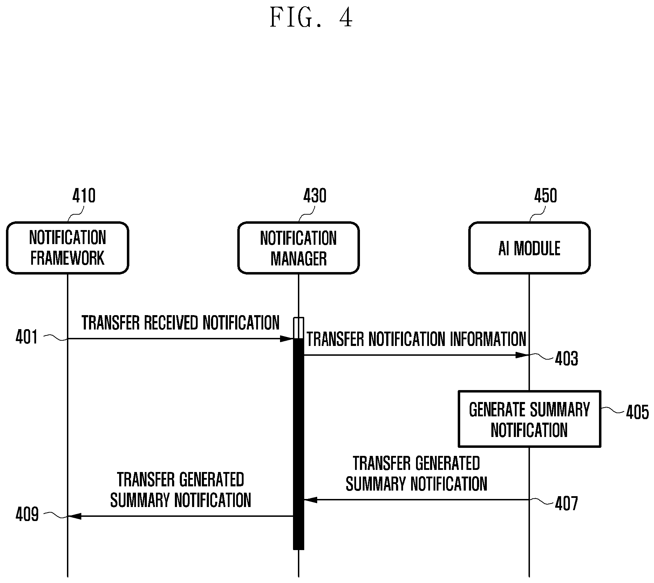

FIG. 4 is a diagram illustrating a configuration of providing a notification in an electronic device according to an embodiment.

Referring to FIG. 4, an electronic device (e.g., the electronic device 101 in FIG. 1) according to an embodiment may include a notification framework 410, a notification manager 430, and an artificial intelligence (AI) module 450. The notification framework 410 is a module for displaying a notification on a display (e.g., the display module 160 in FIG. 1) in the electronic device 101, and may identify the content of all notification messages displayed in the electronic device 101. The notification manager 430 is a module for managing a notification, and may obtain notification information such as a format of a notification, an application of a notification, and a title of a notification. The AI module 450 may be a module for generating a summary notification. The AI module 450 may generate a summary notification, based on a notification and notification information acquired from the notification manager 430.

In operation 401, the notification framework 410 may obtain a notification, and transfer the obtained notification to the notification manager 430. The notification framework 410 may display the acquired notification and transfer the acquired notification to the notification manager 430.

In operation 403, the notification manager 430 may receive the notification from the notification framework 410 and may transfer notification information to the AI module 450. The notification manager 430 may obtain (or extract), from the obtained notification, notification information such as a format of the notification, an application of the notification, and a title of the notification, and may transfer the notification information to the AI module 450.

In operation 405, the AI module 450 may generate a summary notification, based on the notification and notification information acquired from the notification manager 430. According to an embodiment, the AI module 450 may be included in the electronic device 101 or may be included in an intelligent server (e.g., the server 108 in FIG. 1). The AI module 450 may be an artificial intelligence (AI) system. The AI system may be a rule-based system or a neural network-based system (e.g., a feedforward neural network (FNN) or a recurrent neural network (RNN)). Alternatively, the AI system may be a combination of the above or a different artificial intelligence system. According to an embodiment, a plan may be selected from a set of pre-defined plans, or generated in real time in response to a user request.

For example, the AI system may select at least a plan from a plurality of pre-defined plans. The server 108 may receive information related to a user voice input from the electronic device 101 through a communication network. According to an embodiment, the server 108 may convert data related to the received voice input into text data. According to an embodiment, the server 108 may generate a plan for performing a task corresponding to the user voice input, based on the text data. The plan may be generated by the AI system.

In operation 407, the AI module 450 may transfer (or transmit) the generated summary notification to the notification manager 430.

In operation 409, the notification manager 430 may transfer the generated summary notification received from the AI module 450 to the notification framework 410.

The notification framework 410 may display the generated summary notification on the display module 160. The notification framework 410 may display the notification (e.g., an existing notification) and the generated summary notification on the display module 160.

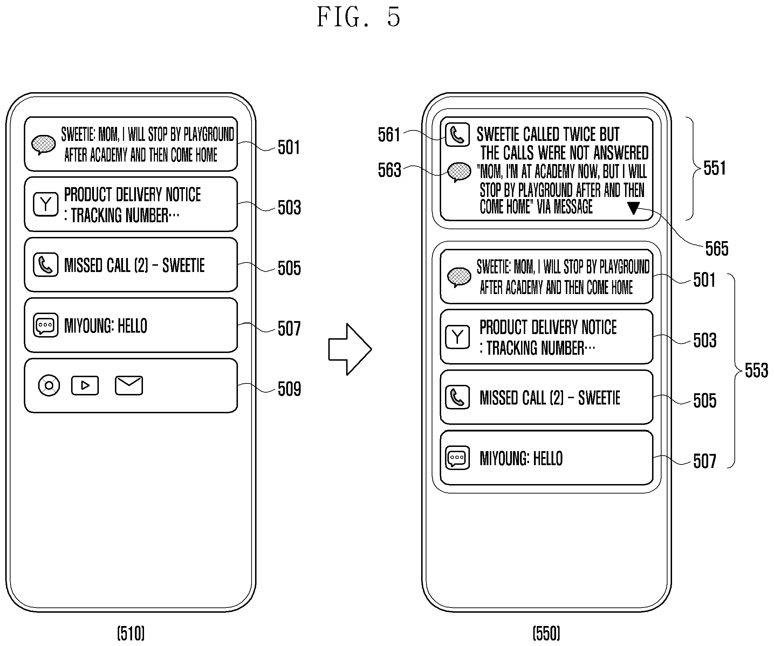

FIG. 5 is a diagram illustrating an example of displaying an existing notification and a generated summary notification in an electronic device according to an embodiment.

Referring to FIG. 5, a processor (e.g., the processor 120 in FIG. 1) of an electronic device (e.g., the electronic device 101 in FIG. 1) according to an embodiment may acquire (or receive) a notification from an application or service (e.g., system) installed in the electronic device 101, and display the acquired notification. For example, the processor 120 may display a first notification 501, a second notification 503, a third notification 505, a fourth notification 507, and a fifth notification 509, as shown in a first user interface 510. The first notification 501 may be acquired from a first application, the second notification 503 may be acquired from a second application, the third notification 505 may be acquired from a third application, the fourth notification 507 may be acquired from a fourth application, and the fifth notification 509 may be acquired from fifth to seventh applications. The first application, third application, and fourth application may correspond to a first type of application, and the second application may correspond to a second type of application.

The processor 120 may directly generate a generated summary notification 551 by analyzing the first notification 501 to the fifth notification 509, or may generate the generated summary notification via an intelligent server (e.g., the server 108 in FIG. 1). The processor 120 may, when the first notification 501 is received after reception of the second notification 503 to the fifth notification 509, analyze a usage history of the first notification 501, analyze a relationship among the first notification 501 to the fifth notification 509, and identify another notification capable of being grouped with the first notification 501, based on a result of the analysis. The generated summary notification 551 may include at least one of text (e.g., sweetie called twice ...), an image (e.g., an application icon), or a video corresponding to the first notification 501 and the third notification 505. In addition, although not illustrated, the generated summary notification 551 may further include a task action item for performing a function associated with the first notification 501 and the third notification 505.

The first notification 501 and the third notification 505 are notifications that correspond to different applications. However, the applications have the same type and the notifications are associated with the same counterpart, and thus the third notification 505 may be identified as another notification capable of being grouped with the first notification 501. The fourth notification 507 may have the same application type as that of the first notification 501 or the third notification 505, but the counterparts are different. Therefore, the fourth notification 507 may not be included in other notifications capable of being grouped with the first notification 501. The processor 120 may transmit the first notification 501 and the third notification 505 to the server 108, and the server 108 may transmit the summary notification 551 generated based on the first notification 501 and the third notification 505 to the electronic device 101. Alternatively, the processor 120 may, when generating the generated summary notification 551, not include the content of the fourth notification 507 because a target associated with the notification is specified as a person, but is different from the target of the first notification 501 or the third notification 505.

After obtaining the generated summary notification 551, the processor 120 may display a second user interface 550 instead of the first user interface 510. The second user interface 550 may include the generated summary notification 551 and an existing notification 553. The existing notification 553 may include the first notification 501, the second notification 503, the third notification 505, and the fourth notification 507. The processor 120 may display the generated summary notification 551 in a top portion of a display (e.g., the display module 160 in FIG. 1), and may display the existing notification 553 below the generated summary notification 551. The processor 120 may display both the generated summary notification 551 and the existing notification 553, thereby enabling a user to simultaneously identify the newly generated summary notification 551 and the existing notification 553.

Alternatively, the processor 120 may include a detailed view button 565 in a bottom portion of the generated summary notification 551, and may display the existing notification 553 when the user selects the detailed view button 565. For example, when displaying a notification, the processor 120 may display only the generated summary notification 551, without displaying the existing notification 553 corresponding to the generated summary notification 551 and, when the user requests to display the existing notification (e.g., selects the detailed view button 565), may display the existing notification 553 instead of the generated summary notification 551.

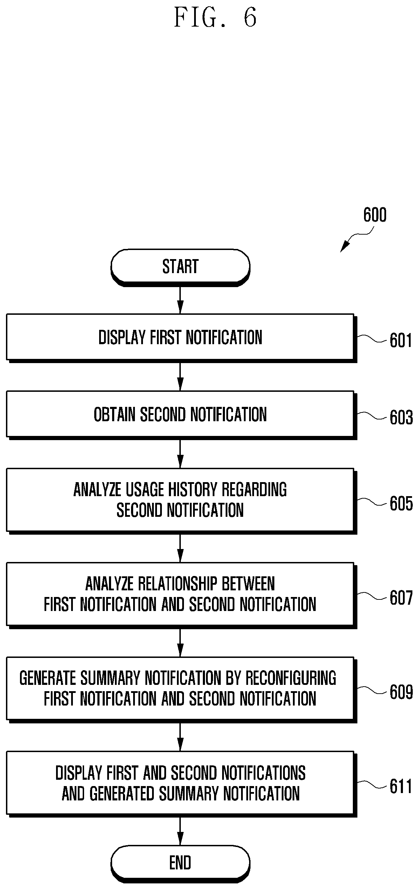

FIG. 6 is a flowchart 600 illustrating a generated summary notification provision method of an electronic device according to an embodiment.

Referring to FIG. 6, in operation 601, a processor (e.g., the processor 120 in FIG. 1) of an electronic device (e.g., the electronic device 101 in FIG. 1) according to an embodiment may display a first notification on a display (e.g., the display module 160 in FIG. 1). The processor 120 may display the first notification at a time point at which the first notification is obtained from an application or service (e.g., a system) installed in the electronic device 101. Alternatively, when the first notification is not selected by a user (e.g., unread) or an application corresponding to the first notification is not executed after the first notification is received, the processor 120 may display the first notification in a notification list via a status bar.

In operation 603, the processor 120 may acquire a second notification. When the second notification is acquired, the processor 120 may display the second notification on the display module 160.

In operation 605, the processor 120 may analyze a usage history regarding the second notification. The usage history regarding the second notification refers to the usage history of an application associated with the second notification, and may correspond to whether the application is frequently used, is occasionally used, or has been recently used. Alternatively, in a case where the second notification includes a counterpart contact (e.g., a phone number or an email address), the processor 120 may analyze, as the usage history regarding the second notification, whether the counterpart contact is stored (or registered) in contacts of the electronic device 101, or whether the counterpart is a person frequently contacted, a person occasionally contacted, a person who has been recently contacted, or a person registered as a favorite. For example, the processor 120 may collect the usage history between before and after the user uses the electronic device 101 (e.g., lock → unlock → lock).

According to an embodiment, in a case where it is determined that a notification displayed while the electronic device 101 is in a lock state has not been identified by the user, the processor 120 may provide a generated summary notification in a new form by reconfiguring groupable notifications with regard to notifications displayed between the lock state and the unlock state. To this end, the processor 120 may, while the user is using the electronic device 101 (e.g., while the electronic device 101 is an unlock state), collect a usage history of the electronic device 101, for example, which application (e.g., a messenger, SNS, or video streaming) is mainly used, which counterpart is frequently contacted, and which operation (e.g., Internet search, product ordering, and video watching) is mainly performed. The processor 120 may reconfigure groupable notifications, based on the usage history of the electronic device 101.

In operation 607, the processor 120 may analyze a relationship between the first notification and the second notification. The processor 120 may analyze whether the applications of the first notification and the second notification are the same, whether the application types of the first notification and the second notification are the same, or whether the counterpart contacts of the first notification and the second notification are the same. For the sake of easier understanding, the second notification may be acquired from the same application as that of the first notification, or may be acquired from an application of the same type as that of the first notification. The type of the application may be a type where a target associated with a notification is specified as a person, such as in calls, messages, or messengers, or is identified as an object (e.g., the same product). For example, the first type may be a contact type, and the second type may be an object type excluding the contact type. The type of the application may be determined based on a category of the application. For example, the category of the application may include at least one of social media, shopping, travel and local, communication, entertainment, sports, productivity, finance, or lifestyle.

In operation 609, the processor 120 may reconfigure the notifications to generate a summary notification. For example, the generated summary notification may be a notification reconfigured through analysis of the context of the first notification and the second notification. The generated summary notification may include at least one of text, an image, or a video corresponding to the first notification and the second notification. In addition, the generated summary notification may further include a task action item for performing a function associated with the first notification and the second notification.

In operation 611, the processor 120 may display the first notification, the second notification, and the generated summary notification on the display module 160. The processor 120 may display the generated summary notification in an upper portion of the display module 160, and display the first notification and the second notification, which corresponds to an existing notification, below the generated summary notification. The processor 120 may display the second notification above the first notification on the display module 160 in the order in which the notifications are acquired. According to an embodiment, the processor 120 may include a detailed view button in a bottom portion of the generated summary notification, and may display the existing notification when the user selects the detailed view button. For example, when displaying a notification, the processor 120 may display only the generated summary notification, without displaying the existing notification corresponding to the generated summary notification and, when the user requests to display the existing notification, may display the existing notification instead of the generated summary notification.

According to an embodiment, when a user input that selects the generated summary notification is detected, the processor 120 may provide an execution screen of an application associated with the generated summary notification. The processor 120 may display the generated summary notification in the execution screen of the application. That is, the processor may display a notification based on which the generated summary notification is generated. For example, in a case where the existing notification is a message of a message application, when the user identifies a message associated with the generated summary notification, the processor may display the generated summary notification in a pop-up form or display the generated summary notification in a region adjacent to the message. Alternatively, the processor 120 may provide the content or history of the generated summary notification in the execution screen of the application.

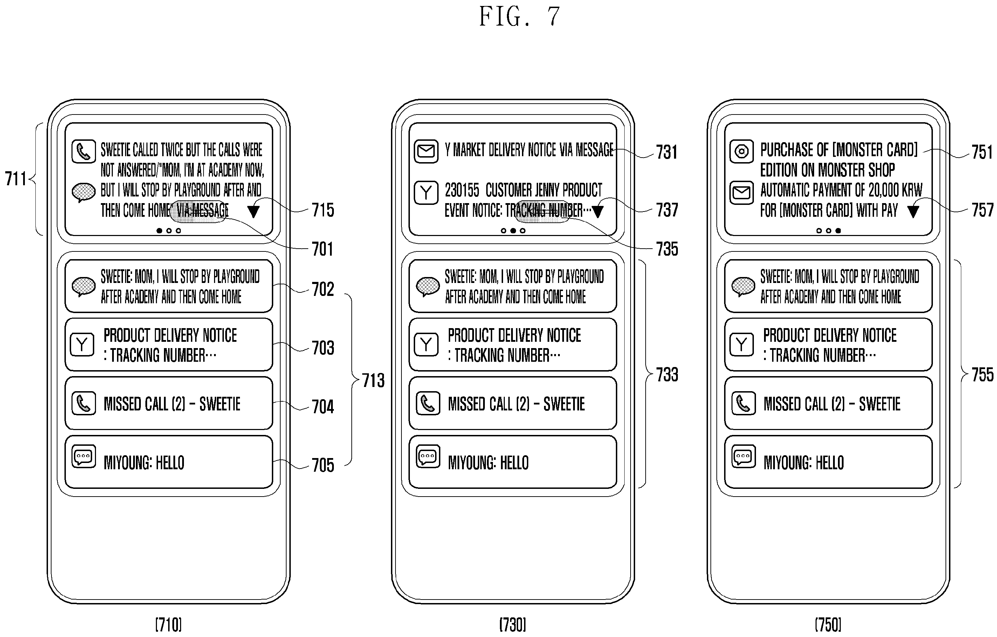

FIG. 7 is a diagram illustrating an example of displaying an existing notification and a generated summary notification in an electronic device according to an embodiment.

Referring to FIG. 7, a processor (e.g., the processor 120 in FIG. 1) of an electronic device (e.g., the electronic device 101 in FIG. 1) according to an embodiment may generate a generated summary notification, based on an acquired notification, and display the generated summary notification and the existing notification on a display (e.g., the display module 160 in FIG. 1). For example, the processor 120 may display a first generated summary notification 711 and an existing notification 713, as shown in a first user interface 710. The existing notification 713 may include a first notification 702, a second notification 703, a third notification 704, and a fourth notification 705. The first generated summary notification 711 may be reconfigured based on the first notification 702 and the third notification 704. The first notification 702 may be acquired from a first application, the second notification 703 may be acquired from a second application, the third notification 704 may be acquired from a third application, and the fourth notification 705 may be acquired from a fourth application. The first application, third application, and fourth application may correspond to a first type of application, and the second application may correspond to a second type of application. The existing notification 713 may further include other notifications not included in the drawing.

The processor 120 may analyze the first notification 702 to the fourth notification 705 to generate the first generated summary notification 711. When a user input that selects a detail view button 715 is detected in the first generated summary notification 711, the processor 120 may display the first notification 702 and the third notification 704, based on the user input. When a user input 701 (e.g., swipe) that changes the first generated summary notification 711 to a different generated summary notification is detected, the processor 120 may display a second user interface 730. The processor 120 may, while displaying the first generated summary notification 711, detect the user input 701 that requests display of a second generated summary notification 731 and, in response to the detected user input 701, change the first generated summary notification 711 to the second generated summary notification 731 and display the second generated summary notification.

The second user interface 730 may include the second generated summary notification 731 and an existing notification 733. The second generated summary notification 731 may be generated by reconfiguring the second notification 702 and a fifth notification (not shown). The existing notification 733 may include the first notification 702, the second notification 703, the third notification 704, and the fourth notification 705. When a user input that selects a detail view button 737 is detected in the second generated summary notification 731, the processor 120 may display the second notification 702 and the fifth notification (not shown), based on the user input. The existing notification 733 may be the same as the existing notification 713 of the first user interface 710.

According to an embodiment, the processor 120 may display the second generated summary notification 731 in an upper portion of the display module 160, and display, below the second generated summary notification 731, the second notification 702 and the fifth notification associated with the second generated summary notification 731 above a notification (e.g., the first notification 702, the third notification 704, and the fourth notification 705) not associated with the second generated summary notification 731. That is, the processor 120 may adjust a notification display order of the existing notification 713 when the first generated summary notification 711 is displayed and a notification display order of the existing notification 733 when the second generated summary notification 731 is displayed, such that the notification display orders are different.

The processor 120 may, while displaying the second generated summary notification 731, detect a user input 735 that requests display of a third generated summary notification 751 and, in response to the detected user input 735, change the second generated summary notification 731 to the third generated summary notification 751 and display the third generated summary notification. When the user input 735 (e.g., left swipe) that changes the second generated summary notification 731 to a different generated summary notification is detected, the processor 120 may display a third user interface 750.

The third user interface 750 may include the third generated summary notification 751 and an existing notification 755. The third generated summary notification 751 may be generated by reconfiguring a sixth notification (not shown) and a seventh notification (not shown). When a user input that selects a detail view button 757 is detected in the third generated summary notification 751, the processor 120 may display the sixth notification and the seventh notification, based on the user input. The existing notification 755 may include the first notification 702, the second notification 703, the third notification 704, and the fourth notification 705. The existing notification 755 may be the same as the existing notification 713 of the first user interface 710.

According to an embodiment, the processor 120 may display the third generated summary notification 751 in an upper portion of the display module 160, and display, below the third generated summary notification 751, the sixth notification and the seventh notification associated with the third generated summary notification 751 above a notification (e.g., the first notification 702, the third notification 704, and the fourth notification 705) not associated with the third generated summary notification 751. That is, the processor 120 may adjust a notification display order of the existing notification 733 when the second generated summary notification 731 is displayed and a notification display order of the existing notification 755 when the third generated summary notification 751 is displayed, such that the notification display orders are different.

According to an embodiment, in a case where there are multiple generated summary notifications, the processor 120 may determine priorities of the generated summary notifications, and when display of a notification list is requested, display the first generated summary notification 711 having a high determined priority. The priorities of the generated summary notifications may be determined based on chronological order (e.g., the last update), the number of grouped notifications, the user's application usage history, or the importance of a contact. For example, the first generated summary notification 711 may have a higher priority than the second generated summary notification 731, and the second generated summary notification 731 may have a higher priority than the third generated summary notification 751.

According to an embodiment, when a user input that swipes to the left is detected on the first generated summary notification 711 in the first user interface 710, the processor 120 may display the second user interface 730. When a user input that swipes to the right is detected on the first generated summary notification 711, the processor 120 may display the third user interface 750.

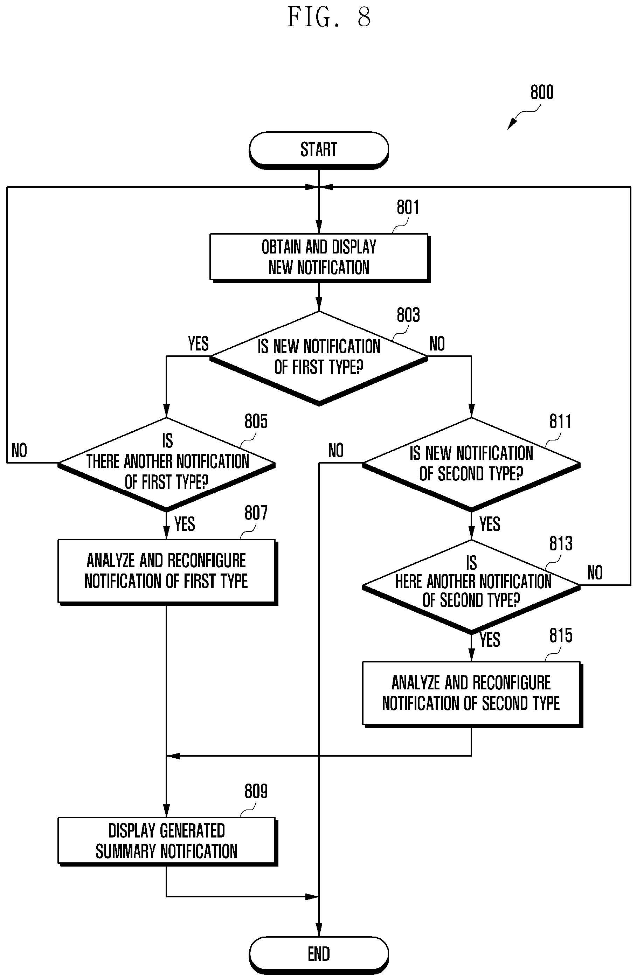

FIG. 8 is a flowchart 800 illustrating a method of generating a summary notification in an electronic device according to an embodiment.

Referring to FIG. 8, in operation 801, a processor (e.g., the processor 120 in FIG. 1) of an electronic device (e.g., the electronic device 101 in FIG. 1) according to an embodiment may acquire (or receive) a new notification and display the new notification on a display (e.g., the display module 160 in FIG. 1). The processor 120 may obtain (or receive) the new notification from an application or service (e.g., a system) installed in the electronic device 101. The processor 120 may acquire the first notification in a case where the application or the electronic device 101 is allowed to receive a push message. The processor 120 may obtain the first notification, based on a user' account configured in the electronic device 101.

In operation 803, the processor 120 may determine whether the new notification is of a first type. The first type may be a contact type, and a second type may be an object type excluding the contact type. The type of the application may be determined based on a category of the application. For example, the category of the application may include at least one of social media, shopping, travel and local, communication, entertainment, sports, productivity, finance, or lifestyle.

In an embodiment, in FIG. 8, it is determined whether there is another notification of the same application type as that of the new notification, but the processor 120 may determine whether there is another notification of the same application as that of the new notification or whether there is another notification received from the same counterpart as that of the new notification.

If the type of the new notification is the first type, the processor 120 may perform operation 805, and if the type of the new notification is not the first type, the processor 120 may perform operation 811.

When the type of the new notification is the first type, in operation 805, the processor 120 may determine whether there is another notification of the first type. When the type of the new notification is the first type and another notification of the first type exists, the processor 120 may identify the another notification of the first type as a notification capable of being grouped with the new notification. If another notification of the first type exists, the processor 120 may perform operation 807, and if another notification of the first type does not exist, the processor 120 may return to operation 801. When another notification of the same type as that of the new notification does not exist, the processor 120 may not generate a generated summary notification.

When another notification of the first type exists, in operation 807, the processor 120 may analyze and reconfigure a notification of the first type. The processor 120 may transmit the new notification and the another notification of the first type to an intelligent server (e.g., the server 108 in FIG. 1), and may acquire, from the server 108, a summary notification generated based on the new notification and the another notification of the first type. Alternatively, autonomously in the electronic device 101, the processor 120 may analyze the context of multiple notifications corresponding to the first type and reconfigure the multiple notifications to generate a summary notification. The generated summary notification may include at least one of text, an image, or a video. In addition, the generated summary notification may further include a task action item for performing a function associated with the multiple notifications.

In operation 809, the processor 120 may display the generated summary notification on the display module 160. The processor 120 may display the generated summary notification in an upper portion of the display module 160, and display an existing notification (e.g., the multiple notifications) below the generated summary notification. The processor 120 may display a most recently obtained notification above a previously obtained notification on the display module 160 in the order in which the notifications are acquired. According to an embodiment, the processor 120 may include a detailed view button in a bottom portion of the generated summary notification, and may display the existing notification when the user selects the detailed view button.

When the type of the new notification is not the first type, in operation 811, the processor 120 may determine whether the new notification is of the second type. If the type of the new notification is the second type, the processor 120 may perform operation 813, and if the type of the new notification is not the second type, the processor 120 may perform termination. In the drawing, an example for the first type and the second type is described for the purpose of helping to understand the disclosure, but the application type may further include other types (e.g., a third type and a fourth type) in addition to the first and second types. The disclosure is not to be limited by the description. That is, when the new notification is not of the second type, the processor 120 may determine whether the new notification is of a third type.

When the type of the new notification is the second type, in operation 813, the processor 120 may determine whether there is another notification of the second type. When the type of the new notification is the second type and another notification of the second type exists, the processor 120 may identify the another notification of the second type as a notification capable of being grouped with the new notification. If another notification of the second type exists, the processor 120 may perform operation 815, and if another notification of the second type does not exist, the processor 120 may return to operation 801. When another notification of the same type as that of the new notification does not exist, the processor 120 may not generate a generated summary notification.

When another notification of the second type exists, in operation 815, the processor 120 may analyze and reconfigure a notification of the second type. The processor 120 may transmit the new notification and the another notification of the second type to the server 108, and may acquire, from the server 108, a summary notification generated based on the new notification and the another notification of the second type. Alternatively, autonomously in the electronic device 101, the processor 120 may analyze the context of multiple notifications corresponding to the second type and reconfigure the multiple notifications to generate a summary notification. The processor 120 may perform operation 809 after generating the generated summary notification.

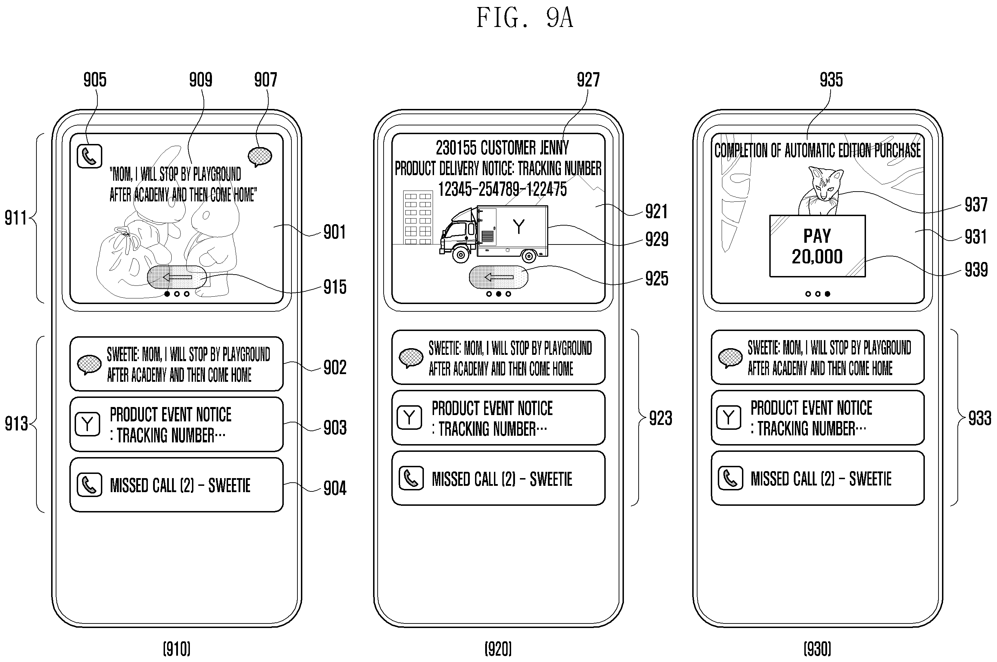

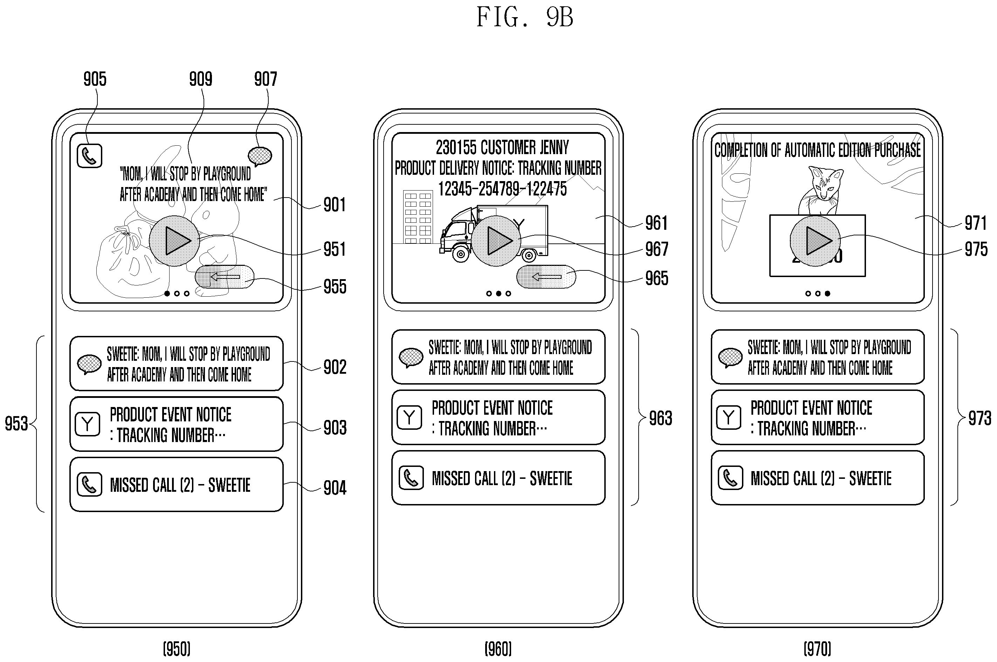

FIG. 9A and FIG. 9B are diagrams illustrating a type of a generated summary notification according to an embodiment.

FIG. 9A illustrates an example in which a generated summary notification is an image.

Referring to FIG. 9A, a processor (e.g., the processor 120 in FIG. 1) of an electronic device (e.g., the electronic device 101 in FIG. 1) according to an embodiment may generate a generated summary notification, based on an acquired notification, and display the generated summary notification and the existing notification on a display (e.g., the display module 160 in FIG. 1). For example, the processor 120 may display a first generated summary notification 911 and an existing notification 913, as shown in a first user interface 910. The existing notification 913 may include a first notification 902, a second notification 903, and a third notification 904. The first generated summary notification 911 may be generated by reconfiguring the first notification 902 and the third notification 904. The first generated summary notification 911 may include text 909, an image (e.g., an icon 905 of a third application and an icon 907 of a first application), and a video corresponding to the first notification 902 and the third notification 904. The first generated summary notification 911 may be generated as an image 901. The existing notification 913 may further include other notifications not included in the drawing.

The first notification 902 may be acquired from the first application, the second notification 903 may be acquired from a second application, and the third notification 904 may be acquired from the third application. The first application and third application may correspond to a first type of application, and the second application may correspond to a second type of application.

The processor 120 may analyze the first notification 902 to the third notification 904 to obtain the first generated summary notification 911. The processor 120 may, while displaying the first generated summary notification 911, detect a user input 915 that requests display of a second generated summary notification 921 and, in response to the detected user input 915, change the first generated summary notification 911 to the second generated summary notification 921 and display the second generated summary notification.

A second user interface 920 may include the second generated summary notification 921 and an existing notification 923. The second generated summary notification 921 may be generated by reconfiguring the second notification 903 and a fourth notification (not shown). The second generated summary notification 921 may include text 927, an image (e.g., a delivery-related image 929), and a video corresponding to the second notification 903 and the fourth notification (not illustrated). The second generated summary notification 921 may be generated as an image. The existing notification 923 may include the first notification 902, the second notification 903, and the third notification 904. The existing notification 923 may be the same as the existing notification 913 of the first user interface 910. According to an embodiment, the processor 120 may display the second generated summary notification 921 in an upper portion of the display module 160, and display, below the second generated summary notification 921, the second notification 903 and the fourth notification (not illustrated) associated with the second generated summary notification 921 above a notification (e.g., the first notification 902, the second notification 903, and the third notification 904) not associated with the second generated summary notification 921. That is, the processor 120 may adjust a notification display order of the existing notification 913 when the first generated summary notification 911 is displayed and a notification display order of the existing notification 923 when the second generated summary notification 921 is displayed, such that the notification display orders are different.

The processor 120 may, while displaying the second generated summary notification 921, detect a user input 925 that requests display of a third generated summary notification 931 and, in response to the detected user input 925, change the second generated summary notification 921 to the third generated summary notification 931 and display the third generated summary notification. A third user interface 930 may include the third generated summary notification 931 and an existing notification 933. The third generated summary notification 931 may be generated by reconfiguring a fifth notification (not shown) and a sixth notification (not shown). The third generated summary notification 931 may include text 935 and 939, an image (e.g., a monster image 937), and a video corresponding to the fifth notification and the sixth notification. The third generated summary notification 931 may be generated as an image. The existing notification 933 may include the first notification 902, the second notification 903, and the third notification 904. The existing notification 933 may be the same as the existing notification 913 of the first user interface 910.

According to an embodiment, the processor 120 may display the third generated summary notification 931 in an upper portion of the display module 160, and display, below the third generated summary notification 931, the sixth notification and the seventh notification associated with the third generated summary notification 931 above a notification (e.g., the first notification 902, the second notification 903, and the third notification 904) not associated with the third generated summary notification 931. That is, the processor 120 may adjust a notification display order of the existing notification 923 when the second generated summary notification 921 is displayed and a notification display order of the existing notification 933 when the third generated summary notification 931 is displayed, such that the notification display orders are different.

According to an embodiment, in a case where there are multiple generated summary notifications, the processor 120 may determine priorities of the generated summary notifications, and when display of a notification list is requested, display the first generated summary notification 911 having a high determined priority. The priorities of the generated summary notifications may be determined based on chronological order (e.g., the last update), the number of grouped notifications, the user's application usage history, or the importance of a contact. For example, the first generated summary notification 911 may have a higher priority than the second generated summary notification 921, and the second generated summary notification 921 may have a higher priority than the third generated summary notification 931.

According to an embodiment, when a user input that swipes to the left is detected on the first generated summary notification 911 in the first user interface 910, the processor 120 may display the second user interface 920. When a user input that swipes to the right is detected on the first generated summary notification 911, the processor 120 may display the third user interface 930.

FIG. 9B illustrates an example in which a generated summary notification is a video.

Referring to FIG. 9B, the processor 120 may display a fourth generated summary notification 951 and an existing notification 953, as shown in a fourth user interface 950. The existing notification 953 may include a first notification 902, a second notification 903, and a third notification 904. The fourth generated summary notification 951 may be generated by reconfiguring the first notification 902 and the third notification 904. The fourth generated summary notification 951 may include text 909, an image (e.g., an icon 905 of a third application and an icon 907 of a first application), and a video corresponding to the first notification 902 and the third notification 904. The fourth generated summary notification 951 is generated as a video and may include a play button 954. The processor 120 may display the fourth generated summary notification 951 in a video format when the play button 954 is selected in the fourth generated summary notification 951. For example, in a case where the first notification 902 and the third notification 904 include a voice recording or a video, the processor 120 may generate, as the summary notification 951, text obtained by summarizing a part corresponding to the voice recording or video, and may display the summary notification 951 including the text. When the user is in a meeting, the processor 120 may provide, as the summary notification 951, text obtained by summarizing a part corresponding to the voice recording or video.

The processor 120 may, while displaying the fourth generated summary notification 951, detect a user input 955 that requests display of a fifth generated summary notification 961 and, in response to the detected user input 955, change the fourth generated summary notification 951 to the fifth generated summary notification 961 and display the fifth generated summary notification.

A fifth user interface 960 may include the fifth generated summary notification 961 and an existing notification 963. The fifth generated summary notification 961 may be generated by reconfiguring the second notification 903 and a fourth notification (not shown). The fifth generated summary notification 961 may include text, an image (e.g., a delivery-related image), and a video corresponding to the second notification 903 and the fourth notification (not illustrated). The fifth generated summary notification 961 is generated as a video and may include a play button 967. The processor 120 may display the fifth generated summary notification 961 in a video format when the play button 967 is selected in the fifth generated summary notification 961.

The processor 120 may, while displaying the fifth generated summary notification 961, detect a user input 965 that requests display of a sixth generated summary notification 971 and, in response to the detected user input 965, change the fifth generated summary notification 961 to the sixth generated summary notification 971 and display the sixth generated summary notification. A sixth user interface 970 may include the sixth generated summary notification 971 and an existing notification 973. The sixth generated summary notification 971 may be generated by reconfiguring a fifth notification (not shown) and a sixth notification (not shown). The sixth generated summary notification 971 may include text, an image, and a video corresponding to the fifth notification and the sixth notification. The sixth generated summary notification 971 is generated as a video and may include a play button 975. The processor 120 may display the sixth generated summary notification 971 in a video format when the play button 975 is selected in the sixth generated summary notification 971.

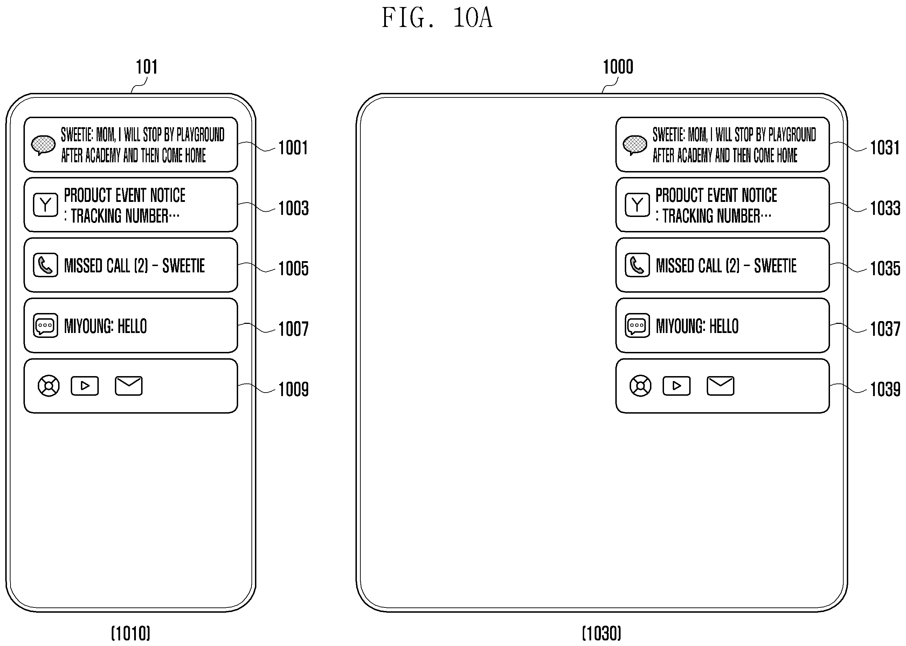

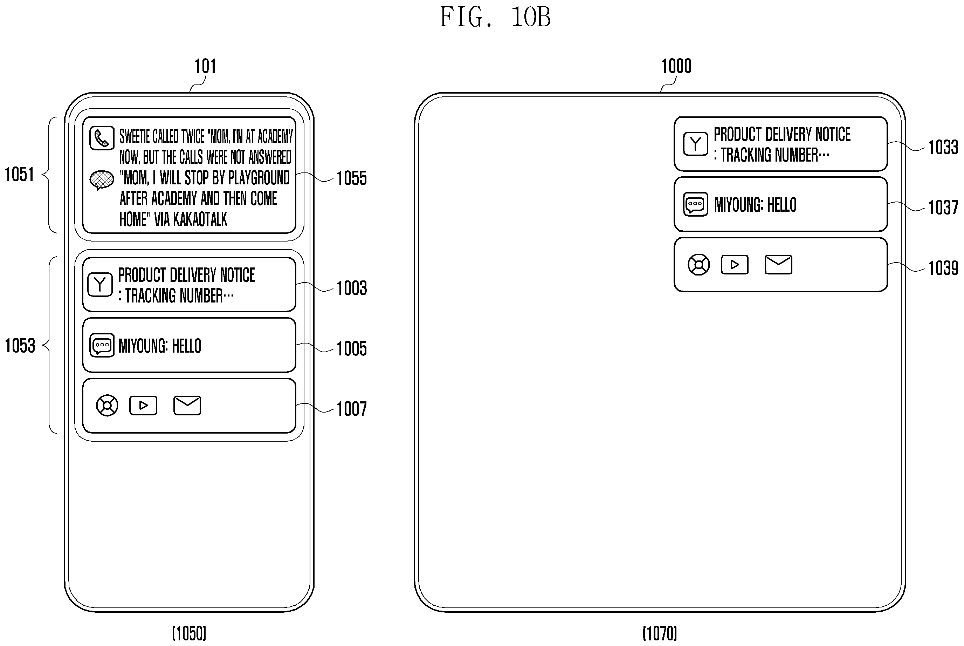

FIG. 10A and FIG. 10B are diagrams illustrating an example of providing a notification in an electronic device and an external electronic device according to an embodiment.

Referring to FIG. 10A, a user may use multiple electronic devices with one user account. For example, in a case where the user uses a first electronic device 101 (e.g., a smartphone) and a second electronic device 1000 (e.g., a laptop) with one user account, notifications acquired by the first electronic device 101 and the second electronic device 1000 may be shared. The first user interface 1010 illustrates an example in which the first electronic device 101 displays a (1-1)th notification 1001, a (2-1)th notification 1003, a (3-1)th notification 1005, a (4-1)th notification 1007, and a (5-1)th notification 1009. A second user interface 1030 illustrates an example in which the second electronic device 1000 displays a (1-2)th notification 1031, a (2-2)th notification 1033, a (3-2)th notification 1035, a (4-2)th notification 1037, and a (5-2)th notification 1039.

Referring to FIG. 10B, the first electronic device 101 may generate a generated summary notification, based on the (1-1)th notification 1001 and the (3-1)th notification 1005, and display the generated summary notification. A third user interface 1050 illustrates an example in which the first electronic device 101 displays a generated summary notification 1051 and an existing notification 1053. For example, the existing notification 1053 may include the (1-1)th notification 1001, the (2-1)th notification 1003, the (3-1)th notification 1005, the (4-1)th notification 1007, and the (5-1)th notification 1009. Alternatively, the existing notification 1053 may include the (3-1)th notification 1003, the (4-1)th notification 1007, and the (5-1)th notification 1009, excluding the (1-1)th notification 1001 and the (3-1)th notification 1005 associated with the generated summary notification 1051.

The user may identify the generated summary notification 1051 by selecting the generated summary notification 1051 in the first electronic device 101. When the generated summary notification 1051 is identified in the first electronic device 101, the generated summary notification 1051 may be deleted from the second electronic device 1000 and not displayed. A fourth user interface 1070 may be an example in which, when the generated summary notification 1051 is identified in the first electronic device 101, the second electronic device 1000 displays a notification. The fourth user interface 1070 may include the (2-2)th notification 1033, the (4-2)th notification 1037, and the (5-2)th notification 1039. The second electronic device 1000 may also remove not only the generated summary notification 1051, but also the display of the (1-2)th notification 1031 and the (3-2)th notification 1035 associated with the generated summary notification 1051.

An operation method of an electronic device 101 according to an embodiment of the disclosure may include receiving a first notification from a communication module 190 of the electronic device and displaying the first notification on a display 160 of the electronic device, identifying a second notification capable of being grouped with the first notification, transmitting the first notification and the second notification to a server 108, obtaining a summary notification generated based on the first notification and the second notification from the server, and displaying the generated summary notification on the display.

The generated summary notification may include at least one of text, an image, or a video corresponding to the first notification and the second notification, and further include a task action item for performing a function associated with the first notification and the second notification.

The identifying of the second notification may include, after acquiring the second notification, acquiring the first notification, analyzing a usage history regarding the first notification, analyzing a relationship between the first notification and the second notification, and identifying the second notification capable of being grouped with the first notification, based on a result of the analysis.

The identifying of the second notification may include determining whether the first notification is of a first type, in case that the first notification is of the first type, determining whether there is another notification of the first type, and in case that the another notification of the first type exists, identifying the another notification of the first type as the second notification capable of being grouped with the first notification.

The identifying of the second notification may further include, in case that the first notification is not of the first type, determining whether the first notification is of a second type, in case that the first notification is of the second type, determining whether there is another notification of the second type, and in case that the another notification of the second type exists, identifying the another notification of the second type as the second notification capable of being grouped with the first notification.

The displaying of the generated summary notification may include displaying the generated summary notification in an upper portion of the display and displaying the first notification and the second notification below the generated summary notification.

The method may include, in case that there are multiple generated summary notifications, determining priorities of the generated summary notifications, and in case that display of a notification list is requested, displaying a first generated summary notification having a high determined priority.

The method may further include, while displaying the first generated summary notification, detecting a user input that requests display of a second generated summary notification, and in response to the detected user input, changing the first generated summary notification to the second generated summary notification and displaying the second generated summary notification.

The displaying of the generated summary notification may further include displaying the first generated summary notification in an upper portion of the display, and below the first generated summary notification, displaying a notification associated with the first generated summary notification above a notification not associated with the first generated summary notification.

The method may further include, in case that a third notification associated with the generated summary notification is acquired, updating the generated summary notification, based on the first notification, the second notification, and the third notification.

Various embodiments of the disclosure disclosed in the specification and the drawings merely provide specific examples in order to easily explain the technical content of the disclosure and to facilitate understanding of the disclosure, and are not intended to limit the scope of the disclosure. Therefore, the scope of the disclosure should be construed to include, in addition to the embodiments disclosed herein, all changes and modifications that are derived based on the technical idea of the disclosure.

## Claims

1. An electronic device (101) comprising:
a display (160);
a communication module (190);
a memory (130) configured to store instructions; and
a processor (120),
wherein the instructions stored in the memory, when executed by the processor, cause the electronic device to:
receive a first notification through the communication module and display the first notification;
identify a second notification capable of being grouped with the first notification;
transmit the first notification and the second notification to a server (108) through the communication module;
acquire, from the server, a summary notification generated based on the first notification and the second notification; and
display the generated summary notification on the display.

2. The electronic device of claim 1, wherein the generated summary notification comprises at least one of text, an image, or a video corresponding to the first notification and the second notification, and
wherein the generated summary notification further comprises a task action item for performing a function associated with the first notification and the second notification.

3. The electronic device of claim 1, wherein the instructions, when executed by the processor, cause the electronic device to:
after acquiring the second notification, acquire the first notification;
analyze a usage history regarding the first notification;
analyze a relationship between the first notification and the second notification; and
based on a result of the analysis, identify the second notification capable of being grouped with the first notification.

4. The electronic device of claim 1, wherein the instructions, when executed by the processor, cause the electronic device to:
determine whether the first notification is of a first type;
in case that the first notification is of the first type, determine whether there is another notification of the first type; and
in case that there is another notification of the first type, identify the another notification of the first type as the second notification capable of being grouped with the first notification.

5. The electronic device of claim 4, wherein the instructions, when executed by the processor, cause the electronic device to:
in case that the first notification is not of the first type, determine whether the first notification is of a second type;
in case that the first notification is of the second type, determine whether there is another notification of the second type; and
in case that there is another notification of the second type, identify the another notification of the second type as the second notification capable of being grouped with the first notification.

6. The electronic device of claim 1, wherein the instructions, when executed by the processor, cause the electronic device to display the generated summary notification in a top portion of the display and display the first notification and the second notification below the generated summary notification.

7. The electronic device of claim 1, wherein the instructions, when executed by the processor, cause the electronic device to:
in case that there are multiple generated summary notifications, determine priorities of the generated summary notifications; and
upon receiving a request for display of a notification list, display a first generated summary notification having a higher determined priority.

8. The electronic device of claim 7, wherein the instructions, when executed by the processor, cause the electronic device to:
while displaying the first generated summary notification, detect a user input requesting display of a second generated summary notification; and
in response to the detected user input, change the first generated summary notification to the second generated summary notification and display the second generated summary notification.

9. The electronic device of claim 7, wherein the instructions, when executed by the processor, cause the electronic device to:
display the first generated summary notification in a top portion of the display; and
below the first generated summary notification, display a notification associated with the first generated summary notification above a notification not associated with the first generated summary notification.

10. The electronic device of claim 1, wherein the instructions, when executed by the processor, cause the electronic device to, in case that a third notification capable of being grouped with the generated summary notification is acquired, update the generated summary notification, based on the first notification, the second notification, and the third notification.

11. An operation method of an electronic device (101), the method comprising:
receiving a first notification from a communication module (190) of the electronic device and displaying the first notification on a display (160) of the electronic device;
identifying a second notification capable of being grouped with the first notification;
transmitting the first notification and the second notification to a server (108) through the communication module;
acquiring, from the server, a summary notification generated based on the first notification and the second notification; and
displaying the generated summary notification on the display.

12. The method of claim 11, wherein the generated summary notification comprises at least one of text, an image, or a video corresponding to the first notification and the second notification, and
wherein the generated summary notification further comprises a task action item for performing a function associated with the first notification and the second notification.

13. The method of claim 11, wherein the identifying of the second notification comprises:
after acquiring the second notification, acquiring the first notification;
analyzing a usage history regarding the first notification;
analyzing a relationship between the first notification and the second notification; and
based on a result of the analysis, identifying the second notification capable of being grouped with the first notification.

14. The method of claim 11, wherein the identifying of the second notification comprises:
determining whether the first notification is of a first type;
in case that the first notification is of the first type, determining whether there is another notification of the first type; and
in case that there is another notification of the first type, identifying the another notification of the first type as the second notification capable of being grouped with the first notification.

15. The method of claim 14, wherein the identifying of the second notification further comprises:
in case that the first notification is not of the first type, determining whether the first notification is of a second type;
in case that the first notification is of the second type, determining whether there is another notification of the second type; and
in case that there is another notification of the second type, identifying the another notification of the second type as the second notification capable of being grouped with the first notification.
